# EUROPÄISCHE PATENTSCHRIFT

(11) **EP 2 927 651 B1**
(45) Veröffentlichungstag und Bekanntmachung des Hinweises auf die Patenterteilung: **16.11.2016**
(21) Anmeldenummer: 15158239.2
(22) Anmeldetag: 09.03.2015
(51) Int. Cl.: G01G 3/14, G01L 1/22, G01G 21/23, G01G 21/28

(54) **Küchenwaage**
Kitchen scale
Balance ménagère

(30) Priorität: 07.03.2014 DE 102014103065
(43) Veröffentlichungstag der Anmeldung: 07.10.2015
(73) Patentinhaber: Leifheit AG, 56377 Nassau (DE)
(72) Erfinder: Denk, Andre, 45481 Mülheim a.d. Ruhr (DE); Spielbusch, Patrick, 56068 Koblenz (DE); Moddick, Christian, 48317 Drensteinfuhrt (DE); Emter, Artjom, 56077 Koblenz (DE)
(74) Vertreter: Bungartz Christophersen Partnerschaft mbB Patentanwälte

(56) Entgegenhaltungen:
- EP-A1- 2 700 918
- DE-U1- 9 418 210
- GB-A- 2 051 373
- US-A1- 2006 213 278
- US-A1- 2009 205 875

## Beschreibung

Die Erfindung betrifft eine Küchenwaage mit
- einer Tragplatte,
- einem die Tragplatte stützenden, insbesondere schalenartigen Unterbau,
- Wägezellen, die zwischen dem Kraftfluss von der Tragplatte zum Unterbau zwischengeschaltet sind und zumindest einen Dehnungsmessstreifen aufweisen, der durch die Deformation der Wägezelle infolge einer auf der Tragplatte liegenden Last deformiert wird,
- einer Elektronik, die aus dem Grad der Deformation der Wägezellen das Gewicht der Last zu berechnen vermag, sowie mit
- einer Anzeigevorrichtung zum Anzeigen des ermittelten Gewichtes und einem Batteriefach zur Aufnahme einer die Elektronik mit Strom versorgenden Spannungsquelle,
wobei die Küchenwaage als offene Küchenwaage mit einem Spalt zwischen der Tragplatte und dem Unterbau ausgebildet ist, so dass Wasser und/oder Feuchtigkeit durch den Spalt in die Küchenwaage eindringen kann und aus der Küchenwaage gelangen kann und die Elektronik sowie die Anzeigevorrichtung wasserdicht eingekapselt sind, die Tragplatte und der Unterbau mit Ausnahme des Batteriefaches und der eingekapselten Elektronik keine Hohlräume aufweist und das Batteriefach gegen eindringendes Wasser abgedichtet ist.

Küchenwaagen dieser Art sind aus der DE 10 2011 051 612 A1 bekannt. Diese Küchenwaagen weisen entweder unterhalb der Tragplatte Stützfüße auf, über die sie auf einem Untergrund aufstehen. Im Bereich der Verbindung der Stützfüße oder in den Stützfüßen selbst sind dann Wägezellen vorgesehen. Diese Wägezellen weisen mit der Deformation der Wägezellen zusammen deformierbare Dehnungsmessstreifen auf, wobei die Elektronik über die Deformation der Dehnungsmessstreifen das auf der Tragplatte aufliegende Gewicht zu bestimmen vermag. Die Küchenwaage weist einen schalenartigen oder flachen Unterbau auf, wobei die Wägezellen zwischen der Tragplatte und dem Unterbau angeordnet sind. Hier existiert zwischen dem Unterbau und der Tragplatte ein Spalt, der infolge der Auslenkung der Tragplatte zusammengedrückt, aber nicht geschlossen wird. Die Elektronik ist dabei am Unterbau angeordnet, kann aber auch an der Tragplatte vorgesehen sein. Gleiches gilt für die Anzeigevorrichtung.

Diese spülmaschinengeeigneten Küchenwaagen haben den Nachteil, dass sie nicht flüssigkeitsdicht sind und somit Spülwasser und Verunreinigungen bzw. Fremdkörper in das Innere der Küchenwaage eindringen können. Zwar sind die Elektronik und das Batteriefach gegen Feuchtigkeit geschützt, die Wägezellen können aber im Bereich der Dehnungsmessstreifen nass werden und durch chemische Einflüsse des Reinigungsmittels oder durch mechanische Stöße der Fremdkörper beschädigt werden. Schließlich stört schon eine erhöhte Luftfeuchtigkeit, erst recht eine Wasserbenetzung die Messung empfindlich.

Es wurden daher Versuche gemacht, eine Küchenwaage vollständig geschlossen auszubilden, so dass diese wasserdicht ist, wie es zum Beispiel von elektrischen Zahnbürsten bekannt ist. Nachdem die Wägezellen aber durch Relativbewegung der Tragplatte zu den übrigen Bereichen der Küchenwaage ausgelenkt werden müssen, ist ein rundum geschlossenes Gehäuse nur schwer zu realisieren. Gerade im Bereich der Wägezellen ist Feuchtigkeit allerdings störend und verfälscht das Messergebnis. Dies ist insbesondere im Bereich der Küchenwaagen hinderlich, da diese üblicherweise eine Genauigkeitvon beispielsweise 1 g aufweisen müssen.

Darüber hinaus hat sich herausgestellt, dass trotz aller Bemühungen eine restlose Feuchtigkeitsdichtigkeit kaum realisierbar ist.

Aus der US 2005/0155435 A1 ist eine Wägezelle u.a. für Wiegezwecke bekannt, die einen, insbesondere von einer Polymerbeschichtung gebildeten, Schutz gegen Wasser im Bereich der Dehnungsmesstreifen aufweist. Diese Beschichtung ist wasserdicht und vergleichsweise aufwändig, so dass sich dieser Aufwand nur in Verbindung mit teuren industriellen Waagen lohnt. Haushaltswaagen stehen jedoch unter einem hohen kostendruck, so dass eine solche wasserdichte Beschichtung hier nicht möglich ist. Ferner darf die Beschichtung die Messgenauigkeit nicht beeinflussen.

Aufgabe der Erfindung ist es daher, eine Küchenwaage dahingehend weiterzubilden, dass sie bei guter Messgenauigkeit kostengünstig herstellbar ist und mit dauerhaft zuverlässiger Funktion unter fließendem Wasser, unter Wasser getaucht oder in einer Spülmaschine gereinigt werden kann und anschließend möglichst schnell wieder mit der gewünschten Messgenauigkeit einsatzbereitist.

Diese Aufgabe wird nach der Erfindung dadurch gelöst, dass die Wägezelle zumindest im Bereich der Dehnungsmessstreifen mit einer flüssigkeitsdichten und dampfdurchlässigen Beschichtung und keiner weiteren Abdeckschichtim Bereich der Beschichtung versehen ist, wobei die Elektronik eine Sensorik zur Messung des Feuchtigkeitsgehalts der Beschichtung aufweist und einerseits während der Ermittlung eines feuchten oder nassen Zustandes oberhalb eines vorgegebenen Schwellwertes des bestimmten Feuchtigkeitsgehalts der Beschichtung die Küchenwaage in einen inaktiven Zustand zu schalten vermag, in dem eine Gewichtsmessung nicht durchgeführt wird oder dessen Ergebnis nicht angezeigt wird und andererseits nach Unterschreiten des Schwellwertes die Küchenwaage in einen betriebsbereiten Zustand zu schalten vermag, in dem das Gewicht der auf der Tragplatte aufliegenden Last gemessen und angezeigt wird.

Erfindungsgemäß wird nun ein Schutz des Dehnungsmessstreifens gewählt, der gerade nicht feuchtigkeitsdicht ist, sondern ein Eindringen von Feuchtigkeit ausdrücklich toleriert. Andererseits wird die Tatsache genutzt, dass nach der Reinigung der Küchenwaage üblicherweise ein Zeitdauer zur Verfügung steht, in der die Küchenwaage nicht benutzt wird und die zum Abtrocknen der Beschichtung unterhalb eines Schwellwertes ausreicht, bei dem eine hinreichende Messgenauigkeit angenommen wird. In Abhängigkeit des Materials und der Dicke der Beschichtung wird dieser Schwellwert bevorzugt experimentell ermittelt.

Die Küchenwaage schaltet bei Wasserkontakt sofort in einen inaktiven Zustand, in dem sie kein Gewicht mehr anzeigt, so dass eine Fehlinformation des Benutzers wirksam vermieden ist. Bei Erreichen eine notwendigen Trocknungsgrades der Beschichtung nach gewisser Zeit, bei dem eine wiegetaugliche Qualität erreicht ist, aber der absolute Nullpunkt nicht unbedingt stabil sein muss, wird dann wieder in den aktiven zustand umgeschaltet und das aktuell gemessene Gewicht angezeigt.

Die Unbrauchbarkeit der Messstelle während des inaktiven Zustandes wird messtechnisch überwacht, so dass die Verwendbarkeit möglichst früh wieder durch Umschalten in den aktiven Zustand überwacht wird. Trotz des Verzichts auf eine vollständig wasserunempfindliche Wägezelle, die für Haushaltsprodukte technisch zu aufwändig wäre, wird mit der diffusionsoffenen, nicht vollständig dichten Beschichtung und dem Überwachen der Feuchtigkeit der Beschichtung eine Lösung bereitgestellt, die es erlaubt, durch Umschalten in den inaktiven Zustand die Anzeige falscher Messergebnisse zu vermeiden. Die Überwachung der Feuchtigkeit kann auf verschiedene Weisen erfolgen, zum Beispiel über eine Messung des Nullpunktes oder der Temperatur.

Auch über die Auswertung der Signale kapazitiver Sensoren kann eine Detektion von Spülvorgängen erfolgen. Schließlich kann auch das Gewicht der Tragplatte ohne Last zur Ermittlung eines betriebsbereiten Zustandes genutzt werden. Da dieses Gewichtja bekannt ist und über die Tarafunktion vom Wiegeergebnis abgezogen wird, kann das Ist-Gewicht mit dem von der Elektronik ermittelten Gewicht der Tragplatte verglichen werden. Sofern sich beide Werte hinreichend gleichen, kann dann von einer zuverlässigen Messung der Wägezellen ausgegangen werden.

Die Erfindung setzt ferner auf die Erkenntnis auf, dass es gerade nicht sinnvoll ist, zur Herstellung einer spülmaschinenfesten Waage diese vollständig flüssigkeitsdicht auszubilden. Im Gegenteil, erfindungsgemäß wird das Eindringen von Wasser und Feuchtigkeit ausdrücklich toleriert, dies gilt sogar für Teilbereiche der elektronischen Bauteile. Erfindungsgemäß ist das Batteriefach vollständig gegen eindringende Feuchtigkeit gesichert, so dass die Stromversorgung zum einen während der Reinigung in der Waage verbleiben kann und zum anderen vor Kurzschlüssen gesichert ist. Ferner ist die Anzeigevorrichtung bevorzugt feuchtigkeitsdicht ausgebildet.

Die sonstige Elektronik dagegen wird erfindungsgemäß zwar eingekapselt und damit grob gegen Feuchtigkeit, insbesondere gegen flüssiges Wasser, gesichert, jedoch wird bei einer Ausgestaltung durchaus toleriert, dass Wasserdampf in den Bereich dieser Elektronik eindringen kann.

Der Bereich zwischen der Tragplatte und dem Unterbau wird insbesondere dann, wenn der Unterbau in Form einer Platte oder flachen Schale vorliegt, bewusst offen gehalten, so dass Reinigungswasser und bei einer möglichen Ausgestaltung sogar Feststoffe, die zum Beispiel in einer Spülmaschine oder einem Spülbecken vorhanden sind, zwischen die beiden Bauteile gelangen können. Die Erfindung geht davon aus, dass diese Flüssigkeitsmengen nach dem Reinigungsprozess wieder ablaufen und die feuchten Bauelemente vergleichsweise schnell wieder abtrocknen können, so dass eine Betriebsbereitschaft nach dem Trocknungsvorgang wieder hergestellt ist.

In die Küchenwaage eindringende Feststoffe können durch die offene Ausführung während des Spülprozesses wieder ausgespült werden. Dadurch, dass bei einer möglichen Ausgestaltung die Elektronik mit üblichen Materialien, zum Beispiel einem Silikon, vergossen wird, ist diese gegen eindringendes Wasser geschützt. Nachdem erfahrungsgemäß diese Materialien aber nicht in der Lage sind, eine Dampfdurchlässigkeit zu vermeiden, wird erfindungsgemäß bewusstin Kauf genommen, dass Feuchtigkeit ein die Elektronik eindringen kann und anschließend wieder abtrocknen muss.

Die Wägezellen werden im sensiblen Bereich, also dem Bereich, in dem sich die Dehnungsmessstreifen verformen, mit der Beschichtung versehen. Diese Beschichtung wird bevorzugt dünn gehalten, so dass sie schnell austrocknen kann. Durch die offene Bauweise der Küchenwaage kann die Konzentrationsdifferenz zwischen den feuchten Bauteilen und den umgebenden Luftbereichen groß gehalten werden, da aus der Elektronik und der Beschichtung der Wägezellen entweichende Feuchtigkeit schnell abgeführt wird. Dies ist insbesondere dann vorteilhaft, wenn die noch feuchte Küchenwaage zum Beispiel im Küchenschrank gelagert wird, so dass durch die dort vorliegenden niedrigen Temperaturen die Diffusionsprozesse verlangsamt sind.

Während in der vergleichsweise heißen Umgebung einer Spülmaschine die Diffusion in die Elektronik und das Material der Beschichtung der Wägezellen durch die hohen Temperaturen begünstigt wird, wird nachfolgend beim Lagern der Küchenwaage durch die dann niedrigeren Temperaturen der Diffusionsgrad geringer sein. Zwar besteht während der Trocknung in der Spülmaschine die Möglichkeit, die dann vorliegenden hohen Temperaturen zu nutzen, jedoch herrscht hier eine überwiegend feuchte Atmosphäre vor, so dass die Feuchtigkeitskonzentration in der umgebenden Luft diesen Effekt weitgehend kompensiert.

Dehnungsmessstreifen weisen üblicherweise hohe notwendige Isolationswiderstände von > 100 M0hm auf. Diese werden durch die Wasseraufnahmefähigkeit der Beschichtung auf ein unbrauchbares Maß reduziert. Ferner kann natürlich bei der feuchten Beschichtung der Elektronik ein Fehlstrom oder Kurzschluss auftreten, der eine korrekte Messung unmöglich macht.

Die Elektronik ist daher zum einen an die Tatsache angepasst, dass möglicherweise eine feuchte Umgebung vorliegen könnte. Diese Anpassung besteht zum Beispiel darin, dass die Leiterbahnen der Elektronik einen im Vergleich zu konventionellen Küchenwaagen vergrößerten Abstand zueinander aufweisen, wobei dieser Abstand beispielsweise verdoppelt und bei einer möglichen Ausgestaltung der Erfindung größer als 1mm ist.

Weiterhin sind die elektrischen Verbindungen zwischen den Wägezellen und der Elektronik, die üblicherweise eine Hauptplatine mit darauf angeordneten Messverstärker aufweist, bevorzugt nicht von Kabeln gebildet, die mit Litzen ummantelt sind, sondern als offene Leiter ausgebildet, die schneller abtrocknen können. Hier können beispielsweise Leitungen aus Kupferlackdraht ohne Mantel Verwendung finden.

Ferner weist die Elektronik einen Schutz vor Fehlmessungen auf, in dem sie die Feuchtigkeit direkt oder indirekt zu bestimmen vermag. Eine direkte Bestimmung erfolgt über Feuchtigkeitssensoren, die beispielsweise durch einen gewissen Grad der Feuchtigkeit kurzgeschlossen werden. Da solche Sensoren nicht überall eingesetzt werden können und den Messaufwand erhöhen, benutzt eine bevorzugte Ausgestaltung der Erfindung die ohnehin vorhandene Sensorik. In diesem Fall wird die Messbrücke zur Bestimmung der Güte der Messung herangezogen.

Der Trocknungszustand der Beschichtung des Dehnungsmessstreifens wird durch die Beobachtung des Driftens des Nullpunktes der Messbrücke bestimmt. Ein Wegdriften des Nullpunktes der abgestimmten Messbrücke deutet dabei auf zu feuchte Messstellen in den Wägezellen hin. Die Verstimmung der Messbrücke im Nullpunkt ist also ein sicheres Zeichen für die momentane Unbrauchbarkeit des Messsystems.

Die Elektronik kann prüfen, ob die Küchenwaage in der Lage ist, zuverlässig das Gewicht zu ermitteln. Dies kann beim Einschaltversuch erfolgen, ferner kann dies auch nach dem Einschalten oder auch im Ruhezustand erfolgen. Die Prüfung kann, wenn es keine initiale Prüfung beim Einschaltversuch ist, kontinuierlich oder in gewissen Abständen, beispielsweise ein bis zehnmal pro Sekunde vorgenommen werden. Bei positiver Prüfung schaltet die Elektronik in den Bereitschaftsmodus und ermittelt das auf der Tragplatte aufliegende Gewicht. Bei negativer Prüfung wird bevorzugt eine Fehlermeldung oder eine Anzeige "Bitte warten" ausgegeben oder die Küchenwaage wird sich einfach nicht einschalten.

Küchenwaagen werden heutzutage häufig über berührungsempfindliche Sensoren einund ausgeschaltet. Solche Sensoren reagieren auf die Änderung des elektrischen Feldes in der Nähe einer Elektrode. Dies kann natürlich auch im Spülbecken bzw. in der Spülmaschine geschehen, so dass die Gefahr besteht, dass unbewusst die Küchenwaage eingeschaltet wird. Dies führt zu einer Verringerung der Betriebsdauer, was offensichtlich unerwünscht ist.

Eine bevorzugte Ausgestaltung der Küchenwaage verwendet daher einen zusätzlichen Sensor, der einen Zustand, in dem die Küchenwaage üblicherweise nicht eingeschaltet werden soll, feststellt und das Einschalten dann unterbindet. Dies kann etwa ein Lichtsensor sein, der feststellt, dass sich die Küchenwaage in einem dunklen Raum befindet. Dies ist ja in einer Spülmaschine der Fall, so dass dort dann ein Einschalten durch den kapazitiven Sensor verhindert werden kann. Beim Reinigen in einem Spülbecken ist dies meist nicht kritisch, da die Küchenwaage ja nur sehr kurz in diesem Becken verbleibt, so dass der zusätzliche Energieverbrauch tolerabelist.

Anstelle des optischen Sensors kann auch jeder andere Sensor eingesetzt werden, der die kritischen Lagerungen oder Zustände erfassen kann. Dies kann beispielsweise ein Temperatursensor sein, der die üblicherweise höheren Temperaturen in der Spülumgebung, insbesondere der Spülmaschine, feststellt.

Ferner kann auch eine Kombination von kapazitivem Sensor und Zusatzsensor aufweisen, wobei dann beide Sensoren betätigt werden müssen. Dies kann über ein gemeinsames Tastfeld geschehen. So kann entweder ein optischer Sensor oder ein Temperaturfühler, der eine Temperaturdifferenz zwischen einem Feld, auf das der Benutzer seinen Finger auflegen muss, und den Umgebungsbereichen misst, zusammen mit dem Signal des kapazitiven Sensors als Schaltimpuls herangezogen werden. In beiden Fällen ist es unwahrscheinlich, dass in der dunklen Spülmaschine oder unter Wasser ein solcher Kombinationssensor ausgelöst wird.

Die Tragplatte und der Unterbau sind so aufgebaut, dass eindringendes Wasser möglichst schnell ablaufen kann. Auch wenn zum Beispiel ein schalenartiger Unterbau konkav gekrümmt sein wird, wird dieser bevorzugt so flach ausgebildet, dass bei stehender Küchenwaage in der Telleraufnahme einer Spülmaschine das Wasser leicht abfließen kann. Eine weitere bevorzugte Ausgestaltung weist eine Tragplatte auf, die lösbar mit dem Unterbau verbunden ist. Bei dieser Ausgestaltung kann der Benutzer den Wasserablauf noch weiter optimieren, indem er die Tragplatte separat vom Unterbau in der Spülmaschine platziert.

Bei abnehmbarer Tragplatte muss der Benutzer nachfolgend die Küchenwaage wieder zusammensetzen. Dies kann über Steckverbindungen in Form von zweiteiligen Stützelementen geschehen, wobei ein oberer Teil an der Tragplatte und ein unteren Teil am Unterbau vorgesehen sind, die miteinander verbunden werden. Von diesen Paarungen wird die Küchenwaage wenigstens drei, bevorzugt vier Stück aufweisen, so dass es möglicherweise nicht ganz einfach ist, die Küchenwaage ordnungsgemäß zusammenzusetzen.

Eine besonders bevorzugte Weiterbildung weist daher eine Magnetverbindung zwischen der Tragplatte und dem Unterbau auf. Hier sind mehrere Magnete sowohl an der Tragplatte als auch am Unterbau vorgesehen, die sich teilweise abstoßen und teilweise anziehen. Die Magnete sind so angeordnet, dass die Abstoßungskräfte und die Anziehungskräfte die Tragplatte selbsttätig oberhalb des Unterbaus zentrieren. Nach dieser selbstständigen Zentrierung können dann die Anziehungskräfte die Tragplatte am Unterbau halten. Bei einer weiteren Ausgestaltung diese Erfindung sind die Magnete unmittelbar an den Wägezellen vorgesehen, die dann zwischen zwei Magneten bzw. zwei Magnetclustern angeordnet sind, die jeweils an der Tragplatte und am Unterbau vorgesehen sind.

Eine andere Ausgestaltung der Küchenwaage weist eine oder mehrere Abdichtungen gegen Feststoffe oder auch gegen flüssiges Wasser auf. Eine Abdichtung gegen flüssiges Wasser muss nicht notwendigerweise jede Menge von Flüssigkeit zurückhalten, sondern zur Erzielung eines positiven Effektes nur das Eindringen der Flüssigkeit verringern. Eine solche Abdichtung kann zum Beispiel von einem Sieb gebildet sein, das den Spalt zwischen der Tragplatte und dem Unterbau verschließt. Dieses elastische Sieb kann zum Beispiel aus Kunststoff gefertigt sein und eine Maschenweite aufweisen, die das Passieren von Flüssigkeit erschwert oder verhindert. Eine flüssigkeitsabweisende Oberfläche, so wie sie zum Beispiel von Kunststoffen, insbesondere PET, geboten wird, kann diesen Effekt zusätzlich verbessern.

Das Sieb sollte eine Maschenweite von weniger als 1 mm aufweisen und wasserfest sein. Ferner sollte es die mechanische Verspannung zwischen Tragplatte und Unterbau möglichst gering halten, also möglichst ohne Aufnahme mechanischer Spannung die Bewegungsfuge verschließen. Vorteilhaft ist eine Lage des Siebes rechtwinklig zur Bewegungsrichtung der Tragplatte. Eine eingeprägte Wellenform des Siebes kann die Steifigkeit zusätzlich verringern, um so die mechanische Verspannung noch weiter zu reduzieren. Ferner kann das Sieb nur einseitig befestigt sein, zum Beispiel an der Tragplatte oder an dem Unterbau.

Sofern die Maschenweite des Siebes sehr gering gewählt wird, beispielsweise weniger als 0,5 mm, kann es passieren, dass zwar Wasser in der Spülmaschine eindringt, dieses aber aufgrund der geringen Maschenweite und der hydrophoben Wirkung der Oberfläche nicht mehr abfließen kann. Dies ist natürlich nicht erwünscht. Hierzu kann im Bereich des Bodens des Unterbaus ein Wasserablauf vorgesehen sein, über den das Wasser trotz des Siebes auslaufen kann. Ferner kann natürlich das Sieb selbst bewusst eingebrachte Durchgangsöffnungen als Wasserablauf aufweisen, wobei es in diesem Fall dann so geformt ist, dass Wasser innerhalb der querstehenden Küchenwaage in den Bereich dieser Durchgangsöffnungen fließt.

Das Sieb kann je nach Wunsch hydrophob oder hydrophil ausgebildet sein. Ein hydrophobes Sieb, insbesondere mit geringer Maschenweite hat den Vorteil, dass wenig Wasser in den Innenraum der offenen Küchenwaage fließen wird. Andererseits kann dann das dennoch eingetretene Wasser aber auch nicht so leicht abfließen. Ein hydrophiles Sieb wiederum hat den Vorteil, dass Flüssigkeit leicht durch das Sieb abfließen kann.

Zur Verbesserung des Abfließverhaltens kann das Wasser in der Küchenwaage auch mit einem Stoff, insbesondere einer Seife, versetzt werden, der die Flüssigkeitsspannung zusätzlich reduziert. Hier kann zum Beispiel ein Seifenpad, das sich kontinuierlich verbraucht, verwendet werden.

Alternativ zu einem Sieb können auch Membrane oder ähnliche Mittel, wie Labyrinthdichtungen ohne Kraftschluss, Verwendung finden. Ferner sind Membrane möglich, die bei Wasserkontakt ihre Form verändern und so temporär den Bewegungsspalt zwischen der Tragplatte und dem Unterbau verschließen. Beim nachfolgenden Trocknungsvorgang stellen sich diese Membrane dann zurück, so dass der Kraftschluss wieder aufgehoben ist.

Schließlich ist es möglich, den Unterbau auch über ein Netz abzudecken, das parallel zur Tragplatte angeordnet ist und an den Seiten mit dem Unterbau fest verbunden ist. Dieses Netz kann dann zum Beispiel so ausgebildet sein, dass die zweiteiligen Stützelemente das Netz zwischen sich einspannen, wobei das Netz so locker über den Unterbau gelegt ist, dass hierdurch ein Kraftschluss vermieden oder zumindest deutlich reduziert ist. Ein solches Netz kann ebenso wie das die Fuge zwischen Tragplatte und Unterbau abdeckende Sieb Feststoffe und auch in gewissem Umfang Flüssigkeiten zurückhalten, so dass zum Beispiel ein Anbacken durch trocknende Feststoffe vermieden wird und gleichzeitig die Menge des Wassers, die nachfolgend wieder ablaufen muss, reduziertist. Auch dieses Netz kann hydrophob ausgebildet sein, auch hier können die Maschenweiten weniger als 1 mm betragen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: ein Ausführungsbeispiel einer erfindungsgemäßen Küchenwaage,
- Fig. 2: die in Figur 1 dargestellte Küchenwaage in einer Explosionsdarstellung und
- Fig. 3: ein Beispiel einer Wägezelle mit erfindungsgemäßer Beschichtung im Bereich des Dehnungsmessstreifens.

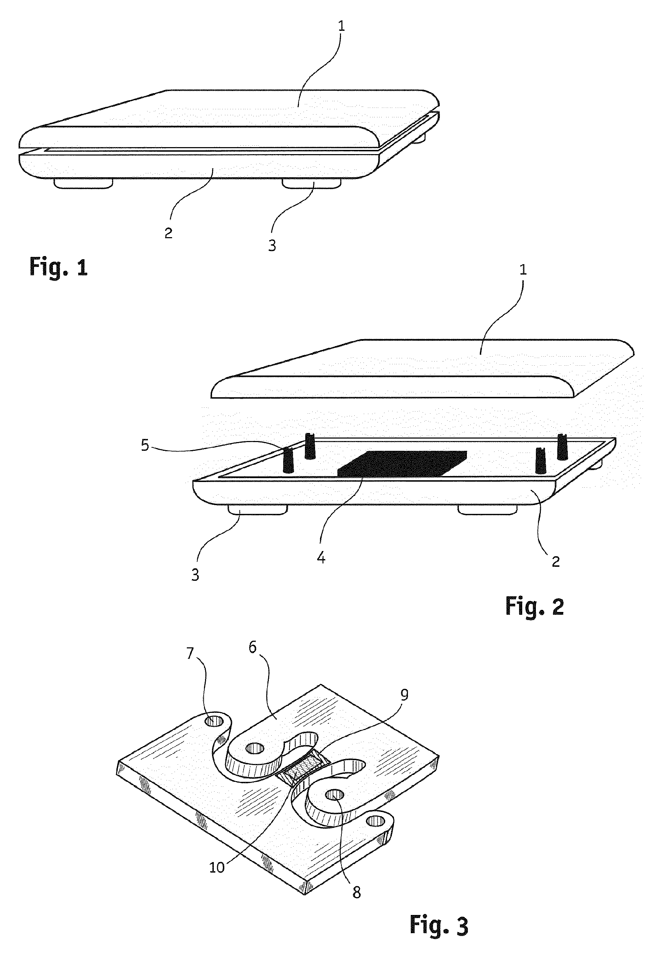

In Figur 1 ist schematisch eine Ausgestaltung einer erfindungsgemäßen Küchenwaage dargestellt. Hier ist der Unterbau 2 in Form einer flachen Wanne ausgebildet, wobei sich über Stützelemente 5 die Tragplatte 1 auf Wägezellen abstützt, die im Unterbau 2 vorgesehen sind. Alternativ können die Wägezellen natürlich auch am oberen Ende der Stützelemente 5 angeordnet sein. Der Unterbau 2 steht über Standfüße 3 auf einer Fläche auf.

Wie aus Figur 2 ersichtlich ist, weist die Küchenwaage im Inneren eine Elektronik 4 auf. Zur optischen Kennzeichnung der flüssigkeitsdichten, aber dampfdurchlässigen Kapselung ist die Elektronik 4 hier schwarz dargestellt. Eine solche Elektronik ist üblicherweise zumindest eine Platine, auf der elektrische Bauelemente angeordnet und über Leiterbahnen miteinander verbunden sind. Diese Bauelemente und die Leiterbahnen sind bevorzugt über Silikon verkapselt.

Die Elektronik 4 wiederum ist mit den Wägezellen über offene Leiterbahnen in Form von Kupferlack verbunden, die sehr schnell abtrocknen können. Zur Vermeidung von Fehlströmen ist der Abstand der Leiterbahnen relativ zu konventionellen Küchenwaagen zueinander vergrößert (hier nicht sichtbar).

Durch die erfindungsgemäße Ausgestaltung der hier zweiteiligen Küchenwaage mit abnehmbarer Tragplatte 1 kann Flüssigkeit und Feuchtigkeit in die Küchenwaage eintreten, was erfindungsgemäß aber toleriert wird, da Flüssigkeit unmittelbar wieder ablaufen kann und Feuchtigkeit durch die offene Bauweise der Küchenwaage schnell abtrocknen kann. Da üblicherweise Küchenwaagen nicht zwischen jedem Wiegeprozess in einer Spülmaschine gereinigt werden, sondern nur am Ende der Benutzung, ist die notwendige Dauer der Abordnung der durch die Diffusion feucht gewordenen elektrischen Elemente in der Praxis nicht relevant.

In Figur 3 ist eine Wägezelle 6 einer möglichen Ausgestaltung einer erfindungsgemäßen Küchenwaage in vergrößerter Ansicht dargestellt. Die Wägezelle 6 weist einen vorderen Abschnitt auf, der mit der Unterschale über zwei unterschalenseitige Befestigungsbohrungen 7 verbinden wird. Ein hinterer Bereich wird mit der Tragplatte 1 über zwei tragplattenseitige Befestigungsbohrungen 8 verbunden. Im Übergangsbereich zwischen dem vorderen und dem hinteren Bereich ist eine Dehnungsmessstreifen 10 angeordnet. Durch das Verbiegen der Wägezelle wird der Dehnungsmessstreifen 10 gedehnt, die damit korrespondierende Änderung des Widerstandes wird dann von der mit dem Dehnungsmessstreifen 10 verbundenen Elektronik 4 zur Bestimmung des Gewichts der auf der Tragplatte 1 aufliegenden Last genutzt. Dies entsprichtim Wesentlichen dem Aufbau der Wägezellen 6 der bekannten Küchenwaagen.

Der Dehnungsmessstreifen 10 ist nun mit einer Beschichtung 9 versehen, die aus einem Nitrilkautschuk, insbesondere einem Nitril-Butadien-Kautschuk (NBR) mit einem Acrylnitrilanteil zwischen 18 und 50 Prozent bestehen kann. Dabei ist der Acrylnitrilanteil maßgeblich für die Temperaturfestigkeit der Beschichtung 9. Bevorzugt wird zur Erzielung einer großen Temperaturbeständigkeit ein Acrylnitrilanteil im unteren Bereich des oben genannten Bereiches gewählt, etwa ein Acrylnitrilanteil von weniger als 30%, insbesondere von weniger als 25%. Auf diese Weise kann die dauerhafte Temperaturbeständigkeit auf 130° und mehr erhöht werden, so dass die Beschichtung 9 den hohen Temperaturen während der Trocknungsphase in der Spülmaschine widerstehen kann.

Alternativ kann auch ein hydrierter Nitril-Butadien-Kautschuk (HNBR) verwendet werden, bei dem durch die Hydrierung die Doppelbindungen des Nitril-Butadien-Kautschuks zugunsten von Einfachbindungen aufgebrochen sind. Auch ein StyrolButadien-Kautschuk oder Guttapercha können zur Bildung der Beschichtung 9 verwendet werden. Die Beschichtung ist nicht feuchtigkeitsdicht und weist bevorzugt eine Dicke von bis zum 1 mm auf. Sie hat den Vorteil, dass sie den Dehnungsmessstreifen 10 vor mechanischen Einflüssen in der Spülmaschine oder im Spülbecken schützt, andererseits aber als dauerhafter Schutz preiswert aufzubringen ist, ohne die Messung zu verfälschen.

### Bezugszeichenliste:

- 1: Tragplatte
- 2: Unterbau
- 3: Standfuß
- 4: Elektronik
- 5: Stützelemente
- 6: Wägezelle
- 7: Unterschalenseitige Befestigungsbohrung
- 8: Tragplattenseitige Befestigungsbohrung
- 9: Beschichtung des Dehnungsmessstreifens
- 10: Dehnungsmesstreifen

## Patentansprüche

1. Küchenwaage mit
• einer Tragplatte (1),
• einem die Tragplatte stützenden Unterbau (2),
• Wägezellen (6), die zwischen dem Kraftfluss von der Tragplatte (1) zum Unterbau (2) zwischengeschaltet sind und zumindest einen Dehnungsmessstreifen (10) aufweisen, der durch die Deformation der Wägezelle (6) infolge einer auf der Tragplatte (1) liegenden Last deformiert wird,
• einer Elektronik (4), die aus dem Grad der Deformation der Wägezellen (6) das Gewicht der Last zu berechnen vermag, sowie mit
• einer Anzeigevorrichtung zum Anzeigen des ermittelten Gewichtes und einem Batteriefach zur Aufnahme einer die Elektronik (4) mit Strom versorgenden Spannungsquelle,
wobei die Küchenwaage als offene Küchenwaage mit einem Spalt zwischen der Tragplatte (1) und dem Unterbau (2) ausgebildet ist, so dass Wasser und/oder Feuchtigkeit durch den Spalt in die Küchenwaage eindringen kann und aus der Küchenwaage gelangen kann und die Elektronik (4) sowie die Anzeigevorrichtung feuchtigkeits- und wasserdicht eingekapselt sind sowie das Batteriefach gegen eindringendes Wasser abgedichtet ist,
**dadurch gekennzeichnet, dass**
die Wägezelle (6) zumindest im Bereich der Dehnungsmessstreifen (10) mit einer zumindest dampfdurchlässigen Beschichtung (9) und keiner weiteren Abdeckschicht im Bereich der Beschichtung (9) versehen ist, wobei die Elektronik (4) eine Sensorik zur Bestimmung des Feuchtigkeitsgehalts der Beschichtung (9) aufweist und derart ausgebildet ist, dass sie einerseits während der Ermittlung eines feuchten oder nassen Zustandes oberhalb eines vorgegebenen Schwellwertes des bestimmten Feuchtigkeitsgehalts der Beschichtung (9) die Küchenwaage in einen inaktiven Zustand zu schalten vermag, in dem eine Gewichtsmessung nicht durchgeführt wird oder dessen Ergebnis nicht angezeigt wird und andererseits nach Unterschreiten des Schwellwertes die Küchenwaage in einen betriebsbereiten Zustand zu schalten vermag, in dem das Gewicht der auf der Tragplatte (1) aufliegenden Last gemessen und angezeigt wird.

2. Küchenwaage nach Anspruch 1, **dadurch gekennzeichnet, dass** die Beschichtung (9) aus einem Nitrilkautschuk, insbesondere einem Nitril-Butadien-Kautschuk (NBR) mit einem Acrylnitrilanteil zwischen 18 und 50 Prozent, einem hydrierten Nitril-Butadien-Kautschuk (HNBR), Styrol-Butadien-Kautschuk oder Guttapercha besteht.

3. Küchenwaage nach einem der beiden vorhergehenden Ansprüche, **dadurch gekennzeichnet, dass** die Beschichtung (9) eine Dicke von bis zu 1 mm aufweist

4. Küchenwaage nach einem der vorhergehenden Ansprüche, **dadurch gekennzeichnet, dass** die Elektronik (4) über eine Vergußmasse eingekapselt ist, die flüssigkeitsdicht und dampfdurchlässig ist und insbesondere von einem Silikon oder einem Nitril-Butadien-Kautschuk (NBR) gebildetist.

5. Küchenwaage nach einem der vorhergehenden Ansprüche, **dadurch gekennzeichnet, dass** der Unterbau (2) von einer Halbschale gebildet ist, die zum Abhalten von Feststoffen von einem insbesondere engmaschigen Netz abgedeckt ist, das bevorzugt eine Maschenweite von weniger als 1 mm aufweist und insbesondere eine hydrophobe Oberflächeneigenschaft aufweist.

6. Küchenwaage nach dem vorhergehenden Anspruch, **dadurch gekennzeichnet, dass** das Netz an den Rändern fest mit der Halbschale verbunden ist und im mittleren Bereich lose auf der Halbschale auffliegt, wobei die Stützelemente (5) zweiteilig mit einem oberen, mit der Tragplatte (1) verbundenen Bereich und einem unteren mit der Halbschale verbundenen Bereich ausgebildet sind und wobei der untere und der obere Bereich der Stützelemente (5) das Netz zwischen sich ein klemmen.

7. Küchenwaage nach einem der Ansprüche 1 bis 4, **dadurch gekennzeichnet, dass** die Elektronik (4) und die Anzeigevorrichtung an der Unterseite der Tragplatte (1) angeordnet sind und der Unterbau (2) von wenigstens drei, bevorzugt vier Stützfüßen gebildet ist, die über die Wägezellen (6) mit der Tragplatte (1) verbunden sind, und dass die Anzeigevorrichtung und die Elektronik (4) über eine Vergußmasse wasserdicht mit der Tragplatte (1) verkapselt sind.

8. Küchenwaage nach einem der vorhergehenden Ansprüche, **dadurch gekennzeichnet, dass** die Elektronik (4) in einem Gehäuse angeordnet ist, dass wasserdicht verkapselt ist.

9. Küchenwaage nach einem der vorhergehenden Ansprüche, **dadurch gekennzeichnet, dass** die Küchenwaage mit der Elektronik (4) zusammenwirkende Feuchtigkeitssensoren aufweist, die die Feuchtigkeit der Beschichtung (9) der Wägezellen (6) zu ermitteln vermag, wobei die Elektronik (4) derart ausgebildet ist, dass oberhalb eines vorgegebenen Schwellwertes eine Gewichtsmessung nicht durchgeführt wird oder dessen Ergebnis nicht angezeigt wird.

10. Küchenwaage nach einem der vorhergehenden Ansprüche, **dadurch gekennzeichnet, dass** die Küchenwaage einen Zeitschalter und einen Feuchtigkeitssensor aufweist, wobei der Feuchtigkeitssensor einen feuchten oder nassen Zustand innerhalb der Küchenwaage zu ermitteln vermag, wobei nach Ermittlung des feuchten oder nassen Zustandes die Elektronik (4) für einen definierten Zeitraum, der zum Trocknen der Beschichtung (9) notwendig ist, die Elektronik (4) über den Zeitschalter in einen inaktiven Zustand umschaltet, in dem eine Gewichtsmessung nicht durchgeführt wird oder dessen Ergebnis nicht angezeigt wird.

11. Küchenwaage nach dem vorhergehenden Anspruch, **dadurch gekennzeichnet, dass** der Feuchtigkeitssensor von einem innerhalb der Küchenwaagen in einem Bereich, in den Flüssigkeit einzudringen vermag, angeordneten elektrischen Schalter mit zwei, durch die eindringende Flüssigkeit überbrückbaren Kontakten oder von einem kapazitiven Sensor mit einer oder mehreren Elektroden gebildet ist.

12. Küchenwaage nach einem der Ansprüche 1 bis 8, **dadurch gekennzeichnet, dass** die Elektronik (4) zur Ermittlung des Gewichtes eine Messbrücke aufweist, wobei die Elektronik (4) die in die Beschichtung (9) eingedrungenen Feuchtigkeit durch Ermittlung des Driftverhaltens des Nullpunktes ermittelt und bei Wegdriften des Nullpunktes über einen definierten Grenzwert hinaus von einem zu feuchten Zustand ausgeht und eine Gewichtsmessung nicht durchgeführt oder dessen Ergebnis nicht anzeigt.

13. Küchenwaage nach einem der vorhergehenden Ansprüche, **dadurch gekennzeichnet, dass** der Spalt zwischen Unterbau (2) und Tragplatte (1) über ein insbesondere senkrecht zur Bewegungsrichtung der Tragplatte (1) angeordnetes, elastisches Sieb geschlossen ist, wobei das Sieb insbesondere eine Maschenweite von weniger als 1 mm aufweist und bevorzugt aus Kunststoff gefertigt ist.

14. Küchenwaage nach einem der vorhergehenden Ansprüche, **dadurch gekennzeichnet, dass** der Unterbau (2) und die Tragplatte (1) über eine lösbare Magnetverbindung miteinander verbunden sind.

15. Küchenwaage nach dem vorhergehenden Anspruch, **dadurch gekennzeichnet, dass** zumindest drei Paare von nebeneinander angeordneten Magneten sowohl an der Tragplatte (1) als auch am Unterbau (2) vorgesehen sind, wobei die Magnete so angeordnet sind, dass durch die Anziehungskraft bzw. Abstoßungskraft der einzelnen Magnete die Tragplatte (1) auf dem Unterbau (2) beim Zusammensetzen selbsttätig zentriert wird.

## Claims

1. Kitchen scale with
• a bearing plate (1),
• a substructure (2) supporting the bearing plate,
• load cells (6), which are interconnected between the flow of force from the bearing plate (1) to the substructure (2) and comprise at least one strain gauge (10), which is deformed by the deformation of the load cell (6) in consequence of a load disposed on the bearing plate (1),
• an electronic circuit (4) which can calculate the weight of the load from the degree of deformation of the load cells (6), and with
• a display device for the display of the detected weight and a battery compartment for retaining a voltage source supplying the electronic circuit (4) with current,
wherein the kitchen scale is constituted as an open kitchen scale with a gap between the bearing plate (1) and the substructure (2), so that water and/or moisture can penetrate through the gap into the kitchen scale and can escape from the kitchen scale, and the electronic circuit (4) and the display device are encapsulated in a moisture-proof and watertight manner, and the battery compartment is sealed off from penetrating water,
**characterised in that,**
at least in the region of the strain gauge (10), the load cell (6) is provided with a at least vapour-permeable coating (9) and no other covering layer in the region of the coating (9), wherein the electronic circuit (4) comprises a sensor unit for detecting the moisture content of the coating (9) and is constituted in such a manner that, on the one hand, during the detection of a moist or wet condition above a pre-set threshold value of the given moisture content of the coating (9), it can switch the kitchen scale into an inactive condition, in which a weight measurement is not implemented or its result is not displayed and, on the other hand, after falling below the threshold value, it can switch the kitchen scale into a condition ready for operation, in which the weight of the load disposed on the bearing plate (1) is measured and displayed.

2. Kitchen scale according to claim 1, **characterised in that**, the coating (9) is made from a nitrile rubber, especially a nitrile butadiene rubber (NBR) with an acrylic nitrile content between 18 and 50 percent, a hydrated nitrile butadiene rubber (HNBR), styrene butadiene rubber or gutta-percha.

3. Kitchen scale according to any one of the two preceding claims, **characterised in that** the coating (9) comprises a thickness up to 1 mm.

4. Kitchen scale according to any one of the preceding claims, **characterised in that** the electronic circuit (4) is encapsulated via a casting compound which is moisture-proof and vapour-permeable and is especially formed from a silicon or nitrile butadiene rubber (NBR).

5. Kitchen scale according to any one of the preceding claims, **characterised in that** the substructure (2) is formed from a half shell which is covered especially by a narrow-mesh net for holding back solids, which preferably comprises a mesh width of less than 1 mm and especially comprises a hydrophobic surface property.

6. Kitchen scale according to the preceding claim, **characterised in that** the net is connected to the half shell at the edges and is disposed loosely on the half shell in the middle region, wherein the support elements (5) are constituted in two parts with an upper region connected to the bearing plate (1) and a lower region connected to the half shell, and wherein the lower and the upper region of the support elements (5) clamp the net between themselves.

7. Kitchen scale according to any one of claims 1 to 4, **characterised in that** the electronic circuit (4) and the display device are arranged at the lower side of the bearing plate (1) and the substructure (2) is formed of at least three, preferably four support feet, which are connected via the load cells (6) to the bearing plate (1), and that the display device and the electronic circuit (4) are encapsulated in a watertight manner with the bearing plate (1) via a casting compound.

8. Kitchen scale according to any one of the preceding claims, **characterised in that** the electronic circuit (4) is arranged in a housing which is encapsulated in a watertight manner.

9. Kitchen scale according to any one of the preceding claims, **characterised in that** the kitchen scale comprises moisture sensors cooperating with the electronic circuit (4) which can detect the moisture of the coating (9) of the load cells (6), wherein the electronic circuit (4) is constituted in such a manner that, above a pre-set threshold value, a weight measurement is not implemented or its result is not displayed.

10. Kitchen scale according to any one of the preceding claims, **characterised in that** the kitchen scale comprises a time switch and a moisture sensor, wherein the moisture sensor can detect a moist or wet condition inside the kitchen scale, wherein, after detecting the moist or wet condition, for a defined time period which is necessary for the drying of the coating (9), the electronic circuit (4) switches the electronic circuit (4) via the time switch into an inactive condition in which a weight measurement is not implemented or its result is not displayed.

11. Kitchen scale according to the preceding claim, **characterised in that** the moisture sensor is formed from an electric switch, arranged inside the kitchen scale in a region in which liquid can penetrate, with two contacts capable of being bridged by the penetrating liquid or from a capacitive sensor with one or more electrodes.

12. Kitchen scale according to any one of claims 1 to 8, **characterised in that** the electronic circuit (4) comprises a measuring bridge for detecting the weight, wherein the electronic circuit (4) detects the moisture penetrated into the coating (9) by detecting the drift behaviour of the zero point, and, in the case of a drifting of the zero point beyond a defined limit value, assumes an excessively moist condition and does not implement a weight measurement or does not display its result.

13. Kitchen scale according to any one of the preceding claims, **characterised in that** the gap between the substructure (2) and bearing plate (1) is closed via an elastic sieve, arranged especially perpendicular to the direction of movement of the bearing plate (1), wherein the sieve comprises especially a mesh width of less than 1 mm and is preferably made of synthetic material.

14. Kitchen scale according to any one of the preceding claims, **characterised in that** the substructure (2) and the bearing plate (1) are connected to one another via a detachable magnetic connection.

15. Kitchen scale according to the preceding claim, **characterised in that** at least three pairs of magnets arranged side-by-side are provided both on the bearing plate (1) and also on the substructure (2), wherein the magnets are arranged in such a manner that, through the force of attraction or respectively the force of repulsion of the individual magnets, the bearing plate (1) is automatically centred on the substructure (2) during assembly.

## Revendications

1. Balance de cuisine dotée
• d'une plaque de support (1),
• d'un infrastructure (2) soutenant la plaque de support,
• de cellules de pesée (6), interposées entre le flux de puissance allant de la plaque de support (1) vers l'infrastructure (2) et présentant au moins une bande de mesure d'allongement (10), qui est déformée par la déformation de la cellule de pesée (6) suite à la dépose d'une charge sur la plaque de support (1),
• de circuits électroniques (4) qui permettent de mesurer le poids de la charge à partir du degré de degré de déformation des cellules de pesée (6), de même
• que d'une unité d'affichage permettant d'afficher le poids déterminé et d'un logement des batteries pour recevoir une source de tension alimentant en courant les circuits électroniques (4),
où la balance de cuisine est conçue sous forme de balance de cuisine ouverte avec un interstice entre la plaque de support (1) et l'infrastructure (2), de sorte que l'eau et/ou l'humidité peut pénétrer dans la balance de cuisine à travers l'interstice et s'échapper de la balance de cuisine et que les circuits électroniques (4) ainsi que l'unité d'affichage sont encapsulés de manière étanche à l'humidité et à l'eau de même que le compartiment pour batteries est étanche à la pénétration d'eau,
**caractérisée en ce**
la cellule de pesée (6) est pourvu au moins dans la zone de la bande de mesure d'allongement (10) d'un revêtement au moins perméable à la vapeur et d'aucune autre couche de revêtement dans la zone de revêtement (9), où les circuits électroniques (4) présentent des capteurs pour définir la teneur en humidité du revêtement (9) et sont conçus de telle sorte qu'ils peuvent, d'une part pendant la détection d'un état humide ou mouillé au-dessus d'une valeur seuil donnée de la teneur en humidité donné du revêtement (9), faire passer la balance de cuisine à un état inactif, où il n'y a aucune mesure de poids ou bien où le résultat de cette dernière n'est pas affiché, et d'autre part, en cas de dépassement de la valeur seuil, faire passer la balance de cuisine à un état prêt à fonctionner, dans lequel le poids de la charge appliquée à la plaque de support (1) est mesuré et affiché.

2. Balance de cuisine selon la revendication 1, **caractérisée en ce que** le revêtement (9) consiste en caoutchouc nitrile, en particulier un caoutchouc nitrile butadiène (NBR) avec une teneur en acryle nitrile comprise entre 18 et 50 pour cent, un caoutchouc nitrile butadiène hydrogéné (HNBR), caoutchouc styrol butadiène ou gutta-percha.

3. Balance de cuisine selon l'une des deux revendications précédentes, **caractérisée en ce que** le revêtement (9) présente une épaisseur allant jusqu'à 1 mm.

4. Balance de cuisine selon l'une quelconque des revendications précédentes, **caractérisée en ce que** les circuits électroniques (4) sont encapsulés au-dessus d'une masse de coulage, qui est étanche au liquide et perméable à la vapeur et est constituée en particulier d'une silicone ou d'un caoutchouc de nitrile butadiène (NBR).

5. Balance de cuisine selon l'une quelconque des revendications précédentes, **caractérisée en ce que** l'infrastructure (2) est constituée d'une demi-coque qui est recouverte d'un filet à mailles étroites en particulier pour retenir les matières solides, filet présentant de préférence une largeur de mailles inférieure à 1 mm et en particulier une propriété de surface hydrophobe.

6. Balance de cuisine selon la revendication précédente, **caractérisée en ce que** le filet est fixé à demeure à la demi-coque au niveau des rebords et repose de façon lâche sur la demi-coque dans la zone médiane, où les éléments supports (5) sont conçus en deux parties, avec une zone supérieure reliée à la plaque de support (1) et une zone inférieure reliée à la demi-coque et où la zone inférieure et la zone supérieure des éléments de support (5) enserrent le filet situé entre elles.

7. Balance de cuisine selon l'une quelconque des revendications 1 à 4, **caractérisée en ce que** les circuits électroniques (4) et l'unité d'affichage sont disposées au niveau du côté inférieur de la plaque de support (1) et l'infrastructure (2) est constituée d'au moins trois, de préférence quatre pieds de support, qui sont reliés à la plaque de support (1) par le biais des cellules de pesée (6) et que l'unité d'affichage et les circuits électroniques (4) sont encapsulés avec la plaque de support (1) par le biais d'une masse de coulage.

8. Balance de cuisine selon l'une quelconque des revendications précédentes, **caractérisée en ce que** les circuits électroniques (4) sont disposés dans un boîtier qui est encapsulé de manière étanche à l'eau.

9. Balance de cuisine selon l'une quelconque des revendications précédentes, **caractérisée en ce que** la balance de cuisine présente des capteurs d'humidité coopérant avec les circuits électroniques (4), capteurs permettant de déterminer l'humidité du revêtement (9) des cellules de pesée (6), où les circuits électroniques (4) sont conçus de telle sorte qu'au-dessus d'une valeur seuil donnée il n'y a aucune mesure de poids ou bien le résultat de cette dernière n'est pas affiché.

10. Balance de cuisine selon l'une quelconque des revendications précédentes, **caractérisée en ce que** la balance de cuisine présente une minuterie et un capteur d'humidité, où le capteur d'humidité permet de déterminer un état humide ou mouillé à l'intérieur de la balance de cuisine, où après avoir déterminé l'état humide ou mouillé, les circuits électroniques (4) pendant une période de temps définie, qui est nécessaire au séchage du revêtement (9), les circuits électroniques (4) sont commutés par la biais de la minuterie vers un état inactif, dans lequel il n'y a aucune mesure de poids ou bien le résultat de cette dernière n'est pas affiché.

11. Balance de cuisine selon la revendication précédente, **caractérisée en ce que** le capteur d'humidité est constitué d'un interrupteur électrique disposé dans une zone dans laquelle le fluide peut pénétrer, interrupteur pourvu de deux contacts pontables par la pénétration du fluide, ou bien d'un capteur capacitif pourvu d'une ou plusieurs électrodes.

12. Balance de cuisine selon l'une quelconque des revendications 1 à 8, **caractérisée en ce que** les circuits électroniques (4) présentent un pont de mesure pour déterminer le poids, où les circuits électroniques (4) détectent l'humidité ayant pénétré dans le revêtement (9) en détectant la dérive du point zéro et en cas de dérive du point zéro s'écarte d'une condition trop humide en dépassant une valeur seuil définie et il n'y a aucune mesure de poids ou bien où le résultat de cette dernière n'est pas affiché.

13. Balance de cuisine selon l'une quelconque des revendications précédentes, **caractérisée en ce que** l'interstice entre l'infrastructure (2) et la plaque de support (1) est refermé par un tamis élastique, disposé en particulier perpendiculairement au sens du mouvement de la plaque de support (1), où le tamis présente en particulier une largeur de mailles inférieure à 1 mm et est constitué de préférence de matériau synthétique.

14. Balance de cuisine selon l'une quelconque des revendications précédentes, **caractérisée en ce que** l'infrastructure (2) et la plaque de support (1) sont reliées entre elles par une connexion magnétique détachable.

15. Balance de cuisine selon la revendication précédente, **caractérisée en ce qu'**au moins trois paires d'aimants juxtaposés sont prévues au niveau de la plaque de support (1) de même que l'infrastructure (2), où les aimants sont disposés de sorte que la plaque de support (1) est centrée automatiquement sur l'infrastructure (2) lors de l'assemblage compte tenu de la force d'attraction ou de la force de répulsion des divers aimants.
